# EUROPÄISCHE PATENTSCHRIFT

(11) **EP 3 296 965 B1**
(45) Veröffentlichungstag und Bekanntmachung des Hinweises auf die Patenterteilung: **18.11.2026**
(21) Anmeldenummer: 17180664.9
(22) Anmeldetag: 11.07.2017
(51) Int. Cl.: G06Q 10/0832, G07C 9/00, G07C 11/00

(54) **VERFAHREN ZUR ABSICHERUNG EINER ÜBERGABESTELLE**
METHOD FOR SECURING A TRANSFER POINT
PROCÉDÉ DE SÉCURISATION D'UN POINT DE TRANSFERT

(30) Priorität: 15.09.2016 DE 102016117387
(43) Veröffentlichungstag der Anmeldung: 21.03.2018
(73) Patentinhaber: StreetScooter GmbH, 52070 Aachen (DE)
(72) Erfinder: SOMMER, Martin, 52076 Aachen (DE); AUGSPURGER, Tobias, 52070 Aachen (DE); BELLOF, Marco, 52070 Aachen (DE)
(74) Vertreter: Cohausz & Florack

(56) Entgegenhaltungen:
- WO-A1-01/39638
- WO-A2-01/30213
- DE-U1- 20 001 122
- US-A1- 2005 269 404

## Beschreibung

### Gebiet

Beispielhafte Ausführungsformen der Erfindung betreffen die Absicherung einer Übergabestelle für Aufnahmevorrichtungen, insbesondere Übergabestellen für Paketstationen oder Paketkästen.

### Hintergrund

Aufnahmevorrichtungen, wie z.B. Schließfächer oder Warenzustellungsbehälter, insbesondere Paketstationen (wie beispielsweise die Packstation der Deutschen Post) oder Paketkästen, werden für eine Aufnahme und Verwahrung von Objekten verwendet. Paketstationen oder Paketkästen ermöglichen beispielsweise eine neuartige Form der Zustellung/Abholung von Sendungen und/oder Lieferungen wie Pakete, Päckchen und/oder Briefe für Personen, die Sendungen und/oder Lieferungen auch in Abwesenheit an oder in der Nähe ihres Wohnsitzes empfangen oder versenden wollen. Dazu werden beispielsweise Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt.

Paketstationen können mindestens eine, bevorzugt aber eine Vielzahl von Aufnahmevorrichtungen aufweisen, wobei Nutzer an Paketstationen insbesondere Pakete, Päckchen und/oder Briefe empfangen und versenden können. Paketstationen können öffentlich sein und sich beispielsweise an öffentlichen Plätzen oder Zustellstationen befinden. Auch können Paketstationen beispielsweise den Bewohnern von Wohnkomplexen oder Mehrfamilienhäusern zur Verfügung gestellt werden, wobei die Paketstationen nicht ohne weiteres öffentlich zugänglich sind und sich beispielsweise im Eingangsbereich oder Keller solcher Wohnkomplexe oder Mehrfamilienhäuser befinden.

Für eine Bestückung der Aufnahmevorrichtungen bzw. für eine Abholung der Sendungen und/oder Lieferungen aus den Aufnahmevorrichtungen zur Versendung werden vom Zustellungsunternehmen Übergabevorrichtungen verwendet, welche eine Übergabe von und zu den Aufnahmevorrichtungen durchführen können. Bei einer Übergabevorrichtung handelt es sich beispielsweise um ein Fahrzeug, welches dafür eingerichtet ist, entsprechende Sendungen und/oder Lieferungen aufzunehmen, zu transportieren und abzugeben. Beispielsweise werden als Übergabevorrichtungen Fahrzeuge eingesetzt, welche die Standorte von Übergabestellen anfahren und insbesondere automatisiert Sendungen und/oder Lieferungen an die Aufnahmevorrichtungen übergeben.

Für eine weitere Optimierung der Übergabe von Sendungen und/oder Lieferungen an die Aufnahmevorrichtungen und von den Aufnahmevorrichtungen sind insbesondere Übergabestellen vorgesehen, an welchen beispielsweise eine automatisierte Übergabe stattfinden kann. Da die Aufnahmevorrichtungen gewöhnlich jedoch auch öffentlich zugänglich sind, beispielsweise damit die Nutzer von Paketkästen Pakete abholen oder abgeben können, ergeben sich insbesondere bei einer automatisierten Übergabe Probleme hinsichtlich der Sicherheit einer Übergabe. Einerseits sollte eine Verletzungsgefahr von anwesenden Personen bei einer Übergabe minimiert werden. Andererseits sollen auch die Sendungen und/oder Lieferungen vor einem unerlaubten Zugriff geschützt werden.

Die US 2005/0269404 A1 betrifft ein System und ein Verfahren zur Fernverwaltung eines Sicherheitsbereichs, beispielsweise einer Depotverwahrung, das einen Zugriff durch eine Gruppe von Benutzern ermöglicht und einen oder mehrere Identitätsbestätigungsschritte umfasst.

Aus der WO 01/39638 A1 ist ein System zur automatischen Lieferung und Abholung von Waren von dem Wohnsitz eines Kunden bekannt. Das System umfasst ein zentrales Steuersystem, das eine Vielzahl von Aufnahmemitteln überwacht und steuert, wobei jedes Aufnahmemitteln durch lösbare Verriegelungsmittel oder deaktivierbare Alarmmittel geschützt ist.

Die DE 200 01 122 U1 betrifft eine Schließfachanordnung mit mehreren Aufnahmevorrichtungen innerhalb eines einbruchgesicherten Bereichs, wobei mittels eines automatische Regalbediengerät Gegenstände von der Aufnahmevorrichtung zu einem Bedienungsbereich außerhalb des einbruchgesicherten Bereichs und zurück transportiert werden können.

Aus der WO 01/30213 A2 ist eine Cross-Docking-Vorrichtung zur unbeaufsichtigten Paketzustellung bekannt. Die Cross-Docking-Vorrichtung umfasst eine Vielzahl von Aufnahmevorrichtungen, die mittels eines Codes verriegelt und entriegelt werden können.

### Zusammenfassung einiger beispielhafter Ausführungsformen der Erfindung

Die vorliegende Erfindung hat sich daher unter anderem die Aufgabe gestellt, diese Probleme zu überwinden. Insbesondere soll eine Übergabestelle bereitgestellt werden können, welche bei einer automatisierten Übergabe von Sendungen und/oder Lieferungen an Aufnahmevorrichtungen, beispielsweise von Paketen an Paketkästen, Sicherheitsanforderungen für Personen und Sendungen und/oder Lieferungen berücksichtigt.

Gemäß einem ersten Aspekt der Erfindung wird die oben genannte Aufgabe mit einem Verfahren gemäß dem Patentanspruch 1 gelöst.

Gemäß dem ersten Aspekt der Erfindung wird die oben genannte Aufgabe zudem mit einer Vorrichtung gemäß Patentanspruch 12 gelöst. Die Vorrichtung (nachfolgend als Vorrichtung gemäß dem ersten Aspekt der Erfindung bezeichnet) ist dazu eingerichtet oder umfasst entsprechende Mittel, ein Verfahren gemäß dem ersten Aspekt der Erfindung durchzuführen und/oder zu steuern. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.

Für das Verfahren gemäß dem ersten Aspekt der Erfindung wird des Weiteren eine Vorrichtung offenbart (und nachfolgend ebenfalls als Vorrichtung gemäß dem ersten Aspekt der Erfindung bezeichnet), die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das jeweilige Verfahren auszuführen und/oder zu steuern. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden.

Zum Beispiel umfasst eine beispielhafte Vorrichtung gemäß dem ersten Aspekt der Erfindung ferner Mittel zum Speichern von Informationen wie einen Programmspeicher und/oder einen Hauptspeicher. Zum Beispiel umfasst eine beispielhafte Vorrichtung gemäß dem ersten Aspekt der Erfindung ferner jeweils Mittel zum Empfangen und/oder Senden von Informationen über ein Netzwerk wie eine Netzwerkschnittstelle. Zum Beispiel sind Vorrichtungen gemäß dem ersten Aspekt der Erfindung über ein oder mehrere Netzwerke miteinander verbunden und/oder verbindbar.

Die Vorrichtung gemäß dem ersten Aspekt der Erfindung kann hierbei ein elektronisches Gerät, beispielsweise eine Steuervorrichtung umfassen. Die Vorrichtung gemäß dem ersten Aspekt der Erfindung kann insbesondere als tragbares Gerät ausgestaltet sein oder fest in einer weiteren Vorrichtung, beispielsweise einer Übergabestelle, einer Aufnahmevorrichtung oder einer Übergabevorrichtung, installiert sein. Eine beispielhafte Vorrichtung gemäß dem ersten Aspekt der Erfindung ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt der Erfindung ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone. Die Vorrichtung gemäß dem ersten Aspekt der Erfindung umfasst insbesondere einen Server, der das Aktivierungssignal ausgibt oder dessen Ausgabe veranlasst, wobei das Aktivierungssignal dann an eine weitere Vorrichtung übergeben wird (beispielsweise an eine Übergabestelle, eine Aufnahmevorrichtung und/oder eine Übergabevorrichtung). Der Server kann beispielsweise in einer Kontrollzentrale, insbesondere einem Back-End eines Zustellungsunternehmens integriert sein, das für die Übergabe an die Aufnahmevorrichtungen verantwortlich ist.

Des Weiteren wird die oben genannte Aufgabe mit einem Computerprogramm (nachfolgend als Computerprogramm gemäß dem ersten Aspekt der Erfindung bezeichnet) gemäß dem Patentanspruch 15 gelöst. Das Computerprogramm umfasst Programmanweisungen, die einen Prozessor zur Ausführung und/oder Steuerung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des jeweiligen Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein.

Gemäß dem ersten Aspekt der Erfindung wird auch ein computerlesbares Speichermedium beschrieben, welches ein Computerprogramm gemäß dem ersten Aspekt der Erfindung enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor. Das Speichermedium kann beispielsweise Teil eines Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Gemäß einem zweiten Aspekt der Erfindung wird die oben genannte Aufgabe mit einem Fahrzeug zur Verwendung als Übergabevorrichtung für mindestens eine Übergabestelle gemäß Patentanspruch 13 gelöst. Das Fahrzeug ist beispielsweise dafür eingerichtet, mit einer Vorrichtung gemäß dem ersten Aspekt der Erfindung zu kommunizieren. Das Fahrzeug gemäß dem zweiten Aspekt der Erfindung umfasst eine Vorrichtung gemäß dem ersten Aspekt der Erfindung. Insbesondere weist das Fahrzeug eine Sensoreinrichtung auf, welche dafür eingerichtet ist, eine Zustandsinformation charakteristisch für die Anwesenheit von Personen oder Objekten an einer Übergabestelle zu bestimmen oder zu ermitteln.

Gemäß einem dritten Aspekt der Erfindung wird die oben genannte Aufgabe mit einer Übergabestelle für mindestens eine Aufnahmevorrichtung gemäß Patentanspruch 14 gelöst. Die Übergabestelle ist beispielsweise dafür eingerichtet, mit einer Vorrichtung gemäß dem ersten Aspekt der Erfindung zu kommunizieren. Die Übergabestelle gemäß dem dritten Aspekt der Erfindung umfasst eine Vorrichtung gemäß dem ersten Aspekt der Erfindung. Insbesondere ist die Übergabestelle gemäß dem dritten Aspekt der Erfindung dafür eingerichtet, mit einem Fahrzeug gemäß dem zweiten Aspekt der Erfindung zu kommunizieren. Insbesondere ist die Übergabestelle gemäß dem dritten Aspekt der Erfindung dafür eingerichtet, mit einem Fahrzeug gemäß dem zweiten Aspekt der Erfindung ein Verfahren gemäß dem ersten Aspekt der Erfindung durchzuführen. Insbesondere weist die Übergabestelle eine Sensoreinrichtung auf, welche dafür eingerichtet ist, eine Zustandsinformation charakteristisch für die Anwesenheit von mindestens einer Person und/oder mindestens einem Objekt an einer Übergabestelle zu bestimmen oder zu ermitteln.

Ferner wird ein System offenbart, das zumindest eine Vorrichtung gemäß dem ersten Aspekt der Erfindung umfasst. Das System umfasst insbesondere weiter ein Fahrzeug gemäß dem zweiten Aspekt der Erfindung und/oder eine Übergabestelle gemäß dem dritten Aspekt der Erfindung.

Ferner wird ein System gemäß dem Patentanspruch 12 offenbart, umfassend mehrere Vorrichtungen, die eingerichtet sind zur Ausführung und/oder Steuerung des Verfahrens gemäß dem ersten Aspekt der Erfindung oder Mittel zur Ausführung und/oder Steuerung der Schritte des Verfahrens gemäß dem ersten Aspekt der Erfindung aufweisen, das System insbesondere umfassend ein Fahrzeug gemäß dem zweiten Aspekt der Erfindung und/oder eine Übergabestelle gemäß dem dritten Aspekt der Erfindung.

Beispielhafte Ausführungsformen aller Aspekte der vorliegenden Erfindung weisen einzelne, mehrere oder alle der nachfolgend beschriebenen Eigenschaften auf.

Unter Aufnahmevorrichtungen werden beispielsweise Schließfächer, Schließfachanlagen, Spinde, Kühlschränke, Warenzustellbehälter, Briefkästen, Paketkästen und Paketstationen verstanden, welche insbesondere jeweils mit einer oder mehreren Türen verschlossen werden können und/oder durch Verriegelungsmittel gesichert sind. Die Aufnahmevorrichtungen sind insbesondere dafür eingerichtet, Sendungen und/oder Lieferungen wie Briefe, Päckchen, Pakete, Essenslieferungen oder Getränkelieferungen aufzunehmen und zu verwahren. Ein Paketkasten kann insbesondere mindestens ein Aufnahmefach für Pakete oder Päckchen aufweisen. Ferner kann ein Paketkasten beispielsweise mit einem Briefschlitz und gegebenenfalls mit einem Aufnahmefach für Briefe versehen sein.

Unter einer Übergabestelle wird insbesondere eine räumlich abgegrenzte Stelle zur Übergabe von Sendungen und/oder Lieferungen an mindestens eine Aufnahmevorrichtung und/oder zur Übergabe von Sendungen und/oder Lieferungen von mindestens einer Aufnahmevorrichtung verstanden. Beispielsweise handelt es sich bei der Übergabestelle um mindestens einen Raum, über welchen mindestens eine Aufnahmevorrichtung zugänglich ist und welcher insbesondere vor äußeren Einflüssen, beispielsweise vor Witterungseinflüssen geschützt ist. Ebenso kann die Übergabestelle einen Schutz vor einem unbefugten Zutritt von Personen oder Tieren bieten. Eine Übergabestelle weist beispielsweise zumindest teilweise oder vollständig eine Überdachung auf und/oder kann vollständig oder teilweise durch Wände umgeben sein. Die Übergabestelle ist dafür eingerichtet, einer Übergabevorrichtung wie einem Fahrzeug einen Zugang zu mindestens einer Aufnahmevorrichtung zu gewähren, damit die Übergabevorrichtung eine Übergabe durchführen kann. Die Übergabestelle ist so dimensioniert, dass eine Übergabevorrichtung wie ein Fahrzeug, insbesondere vollständig, in die Übergabestelle einfahren kann. Für eine Übergabe von Sendungen und/oder Lieferungen sind beispielsweise Übergabemittel vorgesehen, beispielsweise ein Roboterarm, ein Transportband oder ein Aufzug, über welche eine automatisierte Übergabe bewirkt werden kann. Solche Übergabemittel können beispielsweise unbeweglich an der Übergabestelle angeordnet sein und/oder einen Teil einer Übergabevorrichtung wie einem Fahrzeug bilden.

**In** einer beispielhaften Ausführungsform ist die Übergabestelle öffentlich, d.h. die Übergabestelle ist für Personen frei zugänglich. Beispielsweise umfasst die Übergabestelle einen Raum, in welchem mindestens eine Aufnahmevorrichtung vorgesehen ist und/oder zu welchem mindestens eine Aufnahmevorrichtung direkt benachbart angeordnet ist. Insbesondere können Nutzer der Aufnahmevorrichtungen an der Übergabestelle einen Zugriff auf die Aufnahmevorrichtungen erhalten. Beispielsweise handelt es sich bei der Übergabestelle um einen öffentlich zugänglichen Vorraum für eine Paketstation, Briefkästen und/oder für Paketkästen, wobei Benutzer an der Übergabestelle Sendungen und/oder Lieferungen wie beispielsweise Pakete entnehmen oder abgeben.

Alternativ kann die Übergabestelle nicht öffentlich sein und beispielsweise nur für eine bestimmte Personengruppe frei zugänglich sein (beispielsweise die Benutzer einer Mehrfamilienhaus-Paketkastenanlage). Beispielsweise ist eine Zugangskontrollvorrichtung an der Übergabestelle vorgesehen, welche nach vorgegebenen Kriterien nur bestimmten Personen einen Zugang zur Übergabestelle gewähren soll. Hierbei kann es sich beispielsweise um eine Nutzerkontrolle handeln, welche nur registrierten Nutzern und insbesondere Mitarbeitern wie Wartungspersonal einen Zugang zu der Aufnahmevorrichtung oder den Aufnahmevorrichtungen gewähren soll.

In einer weiteren Ausgestaltung ist die Übergabestelle nicht öffentlich und weist beispielsweise eine Zugangskontrollvorrichtung auf, welche nur Mitarbeitern wie Wartungspersonal einen Zugang zu der/den Aufnahmevorrichtung(en) gewährt. Hierbei ist nicht vorgesehen, dass Nutzer sich an der Übergabestelle aufhalten. Beispielsweise ist ein Vorraum für Nutzer an der/den Aufnahmevorrichtung(en) vorgesehen, während an einer anderen Seite der Aufnahmevorrichtung(en) eine nicht öffentliche Übergabestelle angeordnet ist. Die Übergabestelle dient dann lediglich zur Übergabe durch eine Übergabevorrichtung, beispielsweise zum Zugriff eines Fahrzeugs auf die Aufnahmevorrichtung(en) und insbesondere zum Einfahren eines Fahrzeugs.

Übergabestellen müssen entsprechend gesichert sein, um einen reibungslosen Ablauf einer Übergabe mittels einer Übergabevorrichtung zu gewährleisten. Um Probleme bei der Übergabe zu vermeiden, sollte die Übergabestelle nicht für eine Übergabevorrichtung blockiert sein, wenn eine Übergabe stattfinden soll. Insbesondere bei einer Vielzahl von Übergabestellen und Übergabevorrichtungen, welche untereinander koordiniert werden sollen, sind weitere Sicherungsmaßnahmen notwendig, um Verzögerungen im Ablauf der Übergaben zu reduzieren.

Es besteht insbesondere bei einer automatisierten Übergabe eine Verletzungsgefahr für Personen, welche sich an der Übergabestelle aufhalten. Eine solche Verletzungsgefahr kann beispielsweise durch ein einfahrendes Fahrzeug als Übergabevorrichtung oder durch Mittel zur Übergabe gegeben sein, beispielsweise einem Roboterarm. Die Sendungen und/oder Lieferungen sollen bei der Übergabe ebenso vor einem unbefugten Zugriff geschützt werden.

Insbesondere über die Prüfung der Zustandsinformation, welche zumindest charakteristisch für die Anwesenheit von mindestens einer Person oder mindestens einem Objekt an der Übergabestelle ist, kann eine Übergabestelle weiter gesichert werden. Mit der Prüfung wird festgestellt, ob die Zustandsinformation einer Sicherheitsvorgabe entspricht. Die Sicherheitsvorgabe kann beispielsweise fest vorgegeben sein oder von einer externen Stelle, beispielsweise einem Back-End oder einer Übergabevorrichtung bestimmt werden.

Die Sicherheitsvorgabe betrifft beispielsweise die Anwesenheit einer bestimmten Anzahl von Personen an der Übergabestelle. Insbesondere wird geprüft, ob die Anzahl von Personen an der Übergabestelle einen maximalen Wert überschreitet.

Beispielsweise kann es der Sicherheitsvorgabe entsprechen, wenn lediglich eine Person an der Übergabestelle anwesend ist, beispielsweise wenn eine Übergabe das Wirken einer Person erfordert und/oder ausreichend Raum an der Übergangsstelle für eine Person und die Übergabevorrichtung vorhanden ist. Ebenso kann in einer Ausgestaltung die Zustandsinformation nur dann der Sicherheitsvorgabe entsprechen, wenn die Zustandsinformation charakteristisch für die Anwesenheit von keinen Personen an der Übergabestelle ist, insbesondere wenn es sich um eine zuvor beschriebene nicht öffentliche Übergabestelle handelt. Ist insbesondere die Übergabestelle für die Öffentlichkeit und auch für registrierte Nutzer als nicht zugänglich vorgesehen, kann die Anwesenheit einer einzigen Person bereits ein Sicherheitsrisiko darstellen.

Die Sicherheitsvorgabe kann alternativ oder zusätzlich auch die Anwesenheit von mindestens einem Objekt an der Übergabestelle berücksichtigen. Hierbei kann beispielsweise vorgegeben sein, dass sich nur eine bestimmte maximale Anzahl an Objekten an der Übergabestelle befinden darf und/oder dass sich mindestens ein bestimmtes Objekt an der Übergangsstelle befinden muss.

Weiter kann die Prüfung anhand der Sicherheitsvorgabe eine Klassifizierung der Zustandsinformation umfassen. Beispielsweise wird mindestens ein Objekt, für welches die Zustandsinformation charakteristisch ist, anhand von Klassen eingeordnet, beispielsweise auf Grundlage der Größe, der Lage an der Übergabestelle und/oder der Form des mindestens einen Objekts. Beispielsweise kann auch zwischen unbeweglichen Objekten und insbesondere Tieren unterschieden werden. Die Sicherheitsvorgabe kann beispielsweise für jede Klasse von Objekten und/oder Personen verschiedene Kriterien aufweisen. Beispielsweise wird geprüft, ob sich Objekte oberhalb einer bestimmten Größe an der Übergabestelle befinden und/oder ob Objekte an Stellen an der Übergabestelle liegen, welche beispielsweise eine Übergabe, ein Einfahren oder Ausfahren einer Übergabevorrichtung, die Verwendung von Mitteln zur Übergabe und/oder das Öffnen oder Schließen mindestens eines Zugangs wie mindestens einer Tür oder mindestens einem Tor blockieren. Weiter kann auch vorgesehen sein, dass bestimmte Objekte sich an bestimmten Positionen an der Übergabestelle befinden sollen, wobei solche Objekte beispielsweise bei einer Übergabe mitwirken.

Unter einer Übergabevorrichtung wird insbesondere ein Fahrzeug, welches für eine Übergabe von Sendungen und/oder Lieferungen von und/oder zu Aufnahmevorrichtungen eingerichtet ist und insbesondere ein Fahrzeug gemäß dem zweiten Aspekt der Erfindung verstanden. Unter einem Fahrzeug wird insbesondere ein Land-, Luft- und/oder Wasserfahrzeug verstanden, welches insbesondere dafür eingerichtet ist, eine Bewegung durchzuführen. Insbesondere ist das Fahrzeug ein Automobil, beispielsweise ein elektrisch betriebenes Automobil oder eine Drohne wie eine Flugdrohne, beispielsweise ein autonomes Flugzeug. Das Fahrzeug ist insbesondere ein autonomer Drehflügler, beispielsweise ein Helikopter bzw. Quadrokopter. Das Fahrzeug ist insbesondere dafür eingerichtet, Sendungen und/oder Lieferungen von und zu Aufnahmevorrichtungen zu transportieren. Insbesondere weist das Fahrzeug eine Sensoreinrichtung mit Sensoren auf, welche dafür eingerichtet sind, Sensorwerte charakteristisch für eine Zustandsinformation zu ermitteln. Das Fahrzeug kann beispielsweise manuell gesteuert werden und insbesondere ferngesteuert sein oder einen Fahrerraum mit Mitteln zur direkten Steuerung des Fahrzeugs aufweisen. Das Fahrzeug kann teilweise autonom oder vollständig autonom sein und insbesondere über eine Steuerungseinrichtung zumindest teilweise oder vollständig automatisiert operieren.

In einer beispielhaften Ausgestaltung umfasst das Verfahren weiterhin:
- Bestimmen oder Ermitteln der Zustandsinformation charakteristisch für die Anwesenheit von mindestens einer Person und/oder mindestens einem Objekt an der Übergabestelle.

Alternativ oder kumulativ kann das Erhalten der Zustandsinformation charakteristisch für die Anwesenheit von mindestens einer Person und/oder mindestens einem Objekt an der Übergabestelle von einer Kontrollzentrale, beispielsweise einem externen Back-End oder einer sonstigen externen Stelle erfolgen.

Ein Bestimmen oder Ermitteln der Zustandsinformation kann insbesondere von einer Übergabevorrichtung und/oder von der Übergabestelle durchgeführt werden. Beispielsweise weisen die Übergabevorrichtung und/oder die Übergabestelle eine Sensoreinrichtung auf, welche dafür eingerichtet ist, Sensorwerte repräsentativ für zumindest einen Teil einer Zustandsinformation zu bestimmen.

In einer beispielhaften Ausgestaltung umfasst das Bestimmen oder Ermitteln der Zustandsinformation die Verwendung mindestens eines auf elektromagnetische Strahlung empfindlichen Sensors. Beispielsweise wird ein optischer Sensor verwendet, welcher eine Intensität einfallender Strahlung, insbesondere elektromagnetischer Strahlung im sichtbaren Bereich und/oder im nicht sichtbaren Bereich, ermitteln kann. Insbesondere ist der optische Sensor dafür eingerichtet, eine Energieauflösung und/oder räumliche Auflösung der Intensitätsinformation bereitzustellen. Der optische Sensor kann einen Bildsensor umfassen, insbesondere einen digitalen Bildsensor und insbesondere Teil einer Kamera sein. Zur Ermittlung einer optischen Information kann insbesondere mindestens ein Halbleiterelement, Dioden, CCD-Element oder CMOS-Element verwendet werden. Beispielsweise kann über Bildauswertungsverfahren oder Bilderkennungsverfahren ausgewertet werden, ob die ermittelte optische Information charakteristisch für Personen oder Objekte ist. Hierbei kann ein Vergleich mit Referenzwerten herangezogen werden, beispielsweise eine Bildinformation einer leeren Übergabestelle. Beispielsweise wird eine Kalibrierungsmessung zur Ermittlung oder Bestimmung von Referenzwerten vorgenommen, insbesondere durch eine Bestimmung oder Ermittlung der Zustandsinformation an einer leeren Übergabestelle. Referenzwerte können beispielsweise auf einer Datenbank hinterlegt sein, auf welche die Vorrichtung gemäß dem ersten Aspekt der Erfindung Zugriff oder welche ein Teil der Vorrichtung gemäß dem ersten Aspekt der Erfindung ist.

Der verwendete Sensor kann ebenso empfindlich für Wärmestrahlung sein. Beispielsweise kann hierbei über eine für die Körpertemperatur charakteristische Wärmestrahlung auf einfache Weise ermittelt werden, ob sich Personen und/oder Tiere an der Übergabestelle befinden.

Beispielsweise ist mindestens ein verwendeter Sensor auf Ultraschall empfindlich. Beispielsweise ist mindestens ein verwendeter Sensor ein Bewegungssensor. Weiter denkbar ist auch ein Sensor auf Grundlage eines *Light Detection and Ranging* (Lidar)-Verfahrens. Insbesondere kommen zeitabhängige Bestimmungen einer Zustandsinformation in Frage, beispielsweise Laufzeitmessungen insbesondere anhand einer *Time of Flight* (TOF)-Kamera. Distanzmessungen von Oberflächen innerhalb der Übergabestelle können durchgeführt werden, um Aufschluss über an der Übergabestelle anwesende Personen oder Objekte zu erhalten. Insbesondere werden mehrere Sensoren an unterschiedlichen Positionen der Übergabestelle verwendet, so dass über eine Distanzmessung beispielsweise eine dreidimensionale Information über die Oberflächen an der Übergabestelle erhalten werden kann. Beispielsweise kann über eine Klassifizierung der Sensorwerte einer Distanzmessung von einer Sensoreinrichtung zu den Oberflächen, insbesondere einer dreidimensionalen Information, ermittelt werden, ob sich Personen oder Objekte an der Übergabestelle befinden. Prinzipiell können weitere Verfahren der zweidimensionalen oder dreidimensionalen Bildgebung verwendet werden.

Insbesondere ist die Übergabestelle entsprechend der vorgesehenen Wirkungsweise einer Sensoreinrichtung zur Bestimmung oder Ermittlung der Zustandsinformation eingerichtet. Beispielsweise kann eine Übergabestelle ein besonders homogenes Erscheinungsbild aufweisen, etwa über die Verwendung möglichst einfacher Formen und einheitlichen Farben. Beispielsweise sind für die Übergabestelle lediglich rechteckige Formen ohne Vorsprünge vorgesehen. Hiermit kann beispielsweise eine automatisierte Bilderkennung von Personen oder Objekten an der Übergabestelle erleichtert werden. Die Übergabestelle kann temperiert werden, um beispielsweise die Auswertung von Sensorwerten empfindlich für Wärmestrahlung zu erleichtern.

Ist beispielsweise eine Sensoreinrichtung an einer Übergabevorrichtung angeordnet, können auch Wände der Übergabestelle dafür eingerichtet sein, die Verwendung der Sensoreinrichtung von außerhalb der Übergabestelle zu ermöglichen. Beispielsweise ist mindestens ein transparentes Element bzw. ein Fenster an mindestens einer Wand vorgesehen, welches von der Übergabevorrichtung zum Ermitteln oder Bestimmen der Zustandsinformation, beispielsweise über einen optischen Sensor bzw. einer Kamera, von einer Position außerhalb der Übergabestelle verwendet werden kann.

Die Durchführung des Bestimmens oder Ermittelns der Zustandsinformation kann beispielsweise kontinuierlich oder in regelmäßigen und/oder unregelmäßigen Zeitabständen erfolgen, die beispielsweise vorbestimmt und/oder durch Ereignisse bestimmt sind. Beispielsweise erfolgt anhand einer kontinuierlichen Bestimmung oder Ermittlung der Zustandsinformation eine kontinuierliche Überwachung der Anzahl der Personen und/oder Objekte an der Übergabestelle, welche beispielsweise auf einer Anzeigevorrichtung, insbesondere einem Bildschirm oder einer Ampel, an der Übergabestelle oder an einem Back-End ausgegeben wird.

Alternativ oder kumulativ kann auch der Zeitpunkt der Durchführung des Bestimmens oder Ermittelns der Zustandsinformation anhand der Erfassung bestimmter Ereignisse bestimmt sein. In einer beispielhaften Ausgestaltung wird die Durchführung des Bestimmens oder Ermittelns der Zustandsinformation über die Erfassung eines vorgegebenen Status einer Übergabevorrichtung ausgelöst oder die Auslösung bewirkt. Wird insbesondere erfasst, dass eine Übergabevorrichtung sich an einer bestimmten Position befindet, beispielsweise wenn eine Übergabevorrichtung sich (z.B. innerhalb eines bestimmten Abstands) der Übergabestelle nähert oder an der Übergabestelle angekommen ist oder wartet, kann ein Bestimmen oder Ermitteln der Zustandsinformation bewirkt werden. Ebenso kann ein Bestimmen oder Ermitteln der Zustandsinformation durchgeführt werden, bevor die Übergabevorrichtung in die Übergabestelle einfährt bzw. ausfährt oder während eines Einfahrens bzw. Ausfahrens der Übergabevorrichtung.

Weiter kann beispielsweise ein Bestimmen oder Ermitteln der Zustandsinformation von einem Back-End ausgelöst werden, beispielsweise wenn bei einem Back-End die Anwesenheit einer Person an der Übergabestelle registriert ist, etwa bei einer anstehenden Wartungsarbeit. Ebenso denkbar ist, dass ein Zeitpunkt der Durchführung des Bestimmens oder Ermittelns der Zustandsinformation durch eine Aktivität an der Übergabestelle ausgelöst wird, beispielsweise erfasst über eine weitere Sensoreinheit wie ein Bewegungssensor oder das Öffnen oder Schließen eines Zugangs wie einer Tür oder einem Tor.

Die Zustandsinformation charakteristisch für die Anwesenheit von Personen oder Objekten an der Übergabestelle kann auch von einer Kontrollzentrale, beispielsweise einem externen Back-End erhalten werden. Eine Kontrollzentrale kann insbesondere eine Mehrzahl von Aufnahmevorrichtungen, Übergabestellen und Übergabevorrichtungen zur Sendungsverteilung und/oder Lieferungsverteilung kontrollieren und verwalten.

In einer weiteren beispielhaften Ausgestaltung ist die Zustandsinformation weiter charakteristisch für den Status von mindestens einem Zugang zur Übergabestelle und/oder das Aktivierungssignal ursächlich für eine Statusänderung von mindestens einem Zugang zur Übergabestelle.

Als Zugang an der Übergabestelle ist beispielsweise mindestens eine Tür als Zugang für Personen vorgesehen und/oder mindestens ein Tor (und/oder Schleuse) als Zugang für eine Übergabevorrichtung vorgesehen. Ebenso kann die mindestens eine Aufnahmevorrichtung mit einer Tür zur Aufnahme von Sendungen und/oder Lieferungen versehen sein. Entsprechende Zugänge können einen geschlossenen, geöffneten oder teilweise geöffneten Status aufweisen. Beispielsweise ist ein Zugangssensor vorgesehen, welcher einen geschlossenen, offenen, entriegelten und/oder verriegelten Zustand oder die Durchführung eines Öffnens und/oder Schließens erfasst. Insbesondere sind Aktuatoren vorgesehen, welche ein Öffnen und/ oder Schließen der Zugänge bewirken können, wobei der Status der Zugangsstelle auch charakteristisch für den Status eines Aktuators ist, beispielsweise für einen Betriebsmodus oder einen Fehlerzustand. Weiter können Verriegelungsmittel vorgesehen sein, beispielsweise ein elektronisch ansteuerbares Schloss und/oder eine elektronisch ansteuerbare Verriegelungseinheit, wobei der Status des Zugangs auch charakteristisch für den Status eines Verriegelungsmittels ist. Ein Zugang kann zudem eine Zugangskontrollvorrichtung aufweisen, welche beispielsweise mindestens ein Steuermittel umfasst, welches dafür eingerichtet ist, zu prüfen, ob Zugang gewährt wird. Der Status eines Zugangs kann ebenfalls einen Status einer Zugangskontrollvorrichtung umfassen.

Wird festgestellt, dass die Zustandsinformation nicht der Sicherheitsvorgabe entspricht, beispielsweise wenn mindestens ein Zugang blockiert wird und/oder Aktuatoren fehlerbehaftet sind, kann beispielsweise eine Abhilfe wie die Benachrichtigung eines Wartungsdienstes oder Technikers erfolgen.

Das Aktivierungssignal kann ursächlich für eine Statusänderung von mindestens einem Zugang zur Übergabestelle sein. Beispielsweise wird auf Grundlage des Aktivierungssignals ein Öffnen und/oder Schließen des Zugangs veranlasst.

In einer beispielhaften Ausgestaltung weist die Übergabestelle mindestens ein Tor und/oder mindestens eine Schleuse als Zugang für eine Übergabevorrichtung auf, wobei das Verfahren weiterhin umfasst:
- Bewirken eines Öffnens und/oder Entriegelns des Tors oder Schleuse; oder
- Bewirken eines Schließens und/oder Verriegelns des Tors oder Schleuse; insbesondere auf Grundlage des Aktivierungssignals, das ursächlich für eine Statusänderung des Tors und/oder der Schleuse ist.

Das Tor (z.B. ein Rolltor, Sektionaltor, Schiebetor) ist insbesondere derart ausgestaltet, dass bei einem geöffneten Tor die Durchführung einer Übergabe zwischen einer Übergabevorrichtung, beispielsweise einem Fahrzeug, und einer Aufnahmevorrichtung ermöglicht wird. Das Tor ist insbesondere derart ausgestaltet, dass eine Übergabevorrichtung vollständig durch das geöffnete Tor in die Übergabestelle einfahren kann. Wie bereits beschrieben, können insbesondere Aktuatoren und/oder Steuermittel vorgesehen sein, um ein Öffnen, Schließen, Entriegeln und/oder Verriegeln des Tors durchzuführen. Die Aktuatoren können veranlasst werden, insbesondere die genannten Aktionen am Tor durchzuführen, beispielsweise auf Grundlage eines Signals von einem Back-End und/oder auf Grundlage eines Aktivierungssignals.

Beispielsweise kann eine Übergabe vorgesehen sein und sich eine Übergabevorrichtung der Übergabestelle nähern. Insbesondere kann ein Entriegeln und/oder zumindest teilweises Öffnen des Tors bewirkt werden. Hiermit wird der Übergabevorrichtung beispielsweise ermöglicht, eine an der Übergabevorrichtung angeordnete Sensoreinheit, beispielsweise ein optischer Sensor bzw. eine Kamera, zu verwenden, da das zumindest teilweise geöffnete Tor einen Einblick in die Übergabestelle gewähren kann. Weiter kann das Öffnen eines Tors ein Einfahren der Übergabevorrichtung ermöglichen.

Beispielsweise kann bei und/oder nach einem Ausfahren der Übergabevorrichtung bei einem geöffneten Tor ein Bestimmen oder Ermitteln der Zustandsinformation vorgenommen werden. Beispielsweise ist eine Sicherheitsvorgabe angegeben, nach welcher sich keine Personen an der Übergabestelle aufhalten sollen. Ein Schließen und/oder Verriegeln des Tors geschieht auf Grundlage eines Aktivierungssignals insbesondere nur dann, wenn keine Personen an der Übergabestelle anwesend sind. Hiermit kann beispielsweise ein unbeabsichtigtes Einschließen von Personen an der Übergabestelle nach einer Übergabe und/oder ein Blockieren des Tors durch Personen vermieden werden.

In einer weiteren beispielhaften Ausgestaltung weist die Übergabestelle mindestens eine Tür als Zugang für Personen auf, wobei das Verfahren weiterhin umfasst:
- Bewirken eines Öffnens und/oder Entriegelns der Tür; und/oder
- Bewirken eines Schließens und/oder Verriegelns der Tür;
insbesondere auf Grundlage des Aktivierungssignals, das ursächlich für eine Statusänderung der Tür ist.

Unter einer Tür wird beispielsweise eine Schiebetür, Falttür, Drehtür und/oder Schwenktür verstanden.

Wird vor einem Einfahren der Übergabevorrichtung eine Zustandsinformation bestimmt oder ermittelt und anhand der Sicherheitsvorgabe geprüft, kann beispielsweise sichergestellt werden, dass sich keine Personen an der Übergabestelle befinden und anschließend anhand eines Aktivierungssignals zur Absicherung die Tür geschlossen und/oder verriegelt werden.

Eine Anzeigevorrichtung kann beispielsweise an der Übergabestelle vorgesehen sein, um die voraussichtliche Dauer einer Übergabe durch eine Übergabevorrichtung bzw. die Dauer der Verriegelung anzuzeigen, beispielsweise um wartende Personen auf die Dauer der Schließung der Übergabestelle hinzuweisen. Eine Anzeigevorrichtung kann beispielsweise an der Übergabestelle vorgesehen sein, um den voraussichtlichen Zeitpunkt der nächsten Ankunft einer Übergabevorrichtung anzuzeigen und somit den Nutzern der Übergabestelle zu vermitteln, wann die Übergabestelle voraussichtlich geschlossen sein wird.

Ebenso ist es möglich, dass wenn die Zustandsinformation nicht der Sicherheitsvorgabe entspricht, Maßnahmen getroffen werden und beispielsweise mindestens eine Tür entriegelt und geöffnet wird, damit beispielsweise an der Übergabestelle befindliche Personen die Möglichkeit gegeben wird, die Übergabestelle zu verlassen und/oder mindestens eine Tor geschlossen und/oder verriegelt wird, um zu verhindern, dass anwesende Personen beispielsweise durch das Tor die Übergabestelle verlassen. Dies geschieht beispielsweise auf Grundlage einer Warninformation.

In einer beispielhaften Ausführungsform umfasst das Verfahren weiterhin:
- Ausgeben oder Auslösen eines Ausgebens einer Warninformation, wenn die Zustandsinformation nicht der Sicherheitsvorgabe entspricht.

Die Form bzw. der Inhalt der Warninformation ist insbesondere charakteristisch dafür, welche Kriterien bzw. in welchem Maße Kriterien der Sicherheitsvorgabe nicht eingehalten wurden.

Beispielsweise wird anhand einer Warninformation mindestens eine lokale Maßnahme, d.h. insbesondere eine an der Übergabestelle kenntliche Maßnahme oder mindestens eine externe Maßnahme, welche insbesondere eine Kommunikation mit einer externen Stelle, beispielsweise einem Back-End umfasst. Insbesondere umfasst das Verfahren weiterhin:
- Bewirken einer Räumungsmaßnahme für die Übergabestelle auf Grundlage der Warninformation.

Als Räumungsmaßnahme werden insbesondere Maßnahmen verstanden, welche eine Räumung der Übergabestelle direkt oder indirekt bewirken bzw. fördern. Alternativ oder kumulativ kann auch vorgesehen sein, dass die Räumungsmaßnahme die Anwesenheit bestimmter Personen oder Objekte bewirkt bzw. fördert. Lokal kann beispielsweise, wie bereits angeführt, mindestens ein Zugang wie eine Tür oder ein Tor geöffnet und/oder entriegelt werden. Hiermit kann bewirkt werden, dass Personen die Übergabestelle verlassen können oder beispielsweise eine Übergabevorrichtung einfahren und/oder ausfahren kann und/oder eine Übergabevorrichtung warten muss.

Weiter kann eine akustische oder optische Warnung insbesondere an der Übergabestelle ausgegeben oder eine Ausgabe bewirkt werden. Beispielsweise wird mindestens einer an der Übergabestelle befindlichen Person anhand einer akustischen oder optischen Warnung kenntlich gemacht, dass die Übergabestelle zu verlassen ist. Weitere Maßnahmen sind beispielsweise eine Steigerung des Geräuschpegels, eine Veränderung der Temperatur, eine Veränderung der Lichtverhältnisse, beispielsweise eine Abdunkelung der Übergabestelle, mit dem Ziel, mit der Maßnahme auf anwesende Personen dahingehend einzuwirken, dass die Personen die Übergabestelle verlassen/die Person die Übergabestelle verlässt.

Eine akustische oder optische Warnung kann ebenso extern ausgegeben oder eine Ausgabe bewirkt werden, beispielsweise an einem Back-End. Weiter wird beispielsweise eine Kommunikation eines Operators am Back-End mit der Person oder den Personen an der Übergabestelle initiiert. Ebenso kann ein Sicherheitsdienst, ein Wartungsdienst, ein Rettungsdienst oder die Polizei auf Grundlage einer Warninformation alarmiert werden.

Bei der Anwesenheit von einem oder mehreren nicht der Sicherheitsvorgabe entsprechenden Objekten wird beispielsweise Personal zur Entfernung des Objekts/der Objekte benachrichtigt.

Insbesondere ist eine Reihenfolge, insbesondere eine eskalierende Reihenfolge von Maßnahmen und/oder Räumungsmaßnahmen vorgesehen, wenn die Zustandsinformation nicht der Sicherheitsvorgabe entspricht. Beispielsweise wird zunächst eine akustische und/oder optische Warnung an der Übergabestelle bewirkt. Wenn die beispielsweise neu bestimmte oder neu ermittelte Zustandsinformation weiterhin nicht der Sicherheitsvorgabe entspricht, beispielsweise weil mindestens eine anwesende Person die Übergabestelle nicht verlässt, wird anschließend eine Kommunikation mit einem Operator am Back-End initiiert. Schließlich kann als nächste Maßnahme ein Sicherheitsdienst alarmiert werden.

In einer weiteren beispielhaften Ausführungsform umfasst das Verfahren weiterhin:
- Erhalten des Aktivierungssignals und/oder von Warninformation durch eine Übergabevorrichtung; und
- Bewirken einer Änderung eines Betriebsmodus der Übergabevorrichtung auf Grundlage des Aktivierungssignals und/oder von Warninformation.

Der Betriebsmodus der Übergabevorrichtung umfasst insbesondere eine Durchführung mindestens einer Übergabe, insbesondere eine Übergabe einer Sendung und/oder Lieferung, eine Bewegung der Übergabevorrichtung, ein Warten der Übergabevorrichtung oder eine Kombination hiervon.

Mit einem Erhalten des Aktivierungssignals und/oder Warninformation durch eine Übergabevorrichtung kann das Verhalten der Übergabevorrichtung durch den Zustand der Übergabevorrichtung mitbestimmt werden. Beispielsweise wird eine Übergabe oder eine Bewegung der Übergabevorrichtung auf Grundlage eines Aktivierungssignals nur dann durchgeführt, wenn die Zustandsinformation der Sicherheitsvorgabe entspricht. Ein Warten der Übergabevorrichtung wird beispielsweise auf Grundlage einer Warninformation durchgeführt.

In einer weiteren Ausgestaltung ist die Zustandsinformation weiter charakteristisch für den Status mindestens einer Übergabevorrichtung. Beispielsweise kann hierüber festgestellt werden, ob eine Übergabevorrichtung blockiert wird bzw. liegen geblieben ist und insbesondere auch Maßnahmen zur Abhilfe eingeleitet werden, beispielsweise eine Benachrichtigung eines Technikers oder eines Abschleppdienstes.

In einer weiteren Ausgestaltung ist die Zustandsinformation weiter charakteristisch für einen Fehlerstatus der Übergabestelle. Beispielsweise kann hierüber festgestellt werden, ob die Übergabestelle fehlerbehaftet ist und insbesondere auch Maßnahmen zur Abhilfe eingeleitet werden, beispielsweise eine Benachrichtigung eines Technikers. Der Fehlerstatus kann sich beispielsweise auf elektronische und/oder mechanische Komponenten der Übergabestelle beziehen.

In einer weiteren Ausgestaltung umfasst das Verfahren weiterhin:
- Bewirken oder Auslösen eines Bewirkens einer Übergabe mindestens einer Sendung und/oder Lieferung zwischen der Übergabevorrichtung und einer Aufnahmevorrichtung, insbesondere auf Grundlage des Aktivierungssignals.

Bei einer Sendung und/oder Lieferung handelt es sich beispielsweise um einen Brief (insbesondere einen Brief mit darin enthaltener Ware, z.B. einem Buch), ein Päckchen oder ein Paket, eine Essenslieferung und/oder Getränkelieferung, Wäsche und/oder Stückgut. Unter einer Übergabe wird beispielsweise verstanden,
- dass eine Sendung und/oder Lieferung sich körperlich innerhalb oder unmittelbar an einer Aufnahmevorrichtung befindet und in einen Zustand überführt wird, in welchem sich die Sendung und/oder Lieferung innerhalb oder unmittelbar an einer Übergabevorrichtung befindet; oder
- dass eine Sendung und/oder Lieferung sich körperlich innerhalb oder unmittelbar an einer Übergabevorrichtung befindet und in einen Zustand überführt wird, in welchem sich die Sendung und/oder Lieferung innerhalb oder unmittelbar an einer Aufnahmevorrichtung befindet.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte der Erfindung offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung;
- Fig. 2:: ein Flussdiagramm einer beispielhaften Ausführungsform eines Verfahrens gemäß dem ersten Aspekt der vorliegenden Erfindung;
- Fig. 3:: ein Blockdiagramm eines Ausführungsbeispiels einer Vorrichtung, welche insbesondere ein beispielhaftes Verfahren gemäß dem ersten Aspekt der vorliegenden Erfindung ausführen kann;
- Fig. 4a, b:: schematische Darstellungen von beispielhaften Ausführungsformen von Fahrzeugen und Übergabestellen gemäß dem zweiten und dritten Aspekt der vorliegenden Erfindung; und
- Fig. 5:: ein Flussdiagramm einer weiteren beispielhaften Ausführungsform eines Verfahrens gemäß dem ersten Aspekt der vorliegenden Erfindung.

### Detaillierte Beschreibung einiger beispielhafter Ausführungsformen der Erfindung

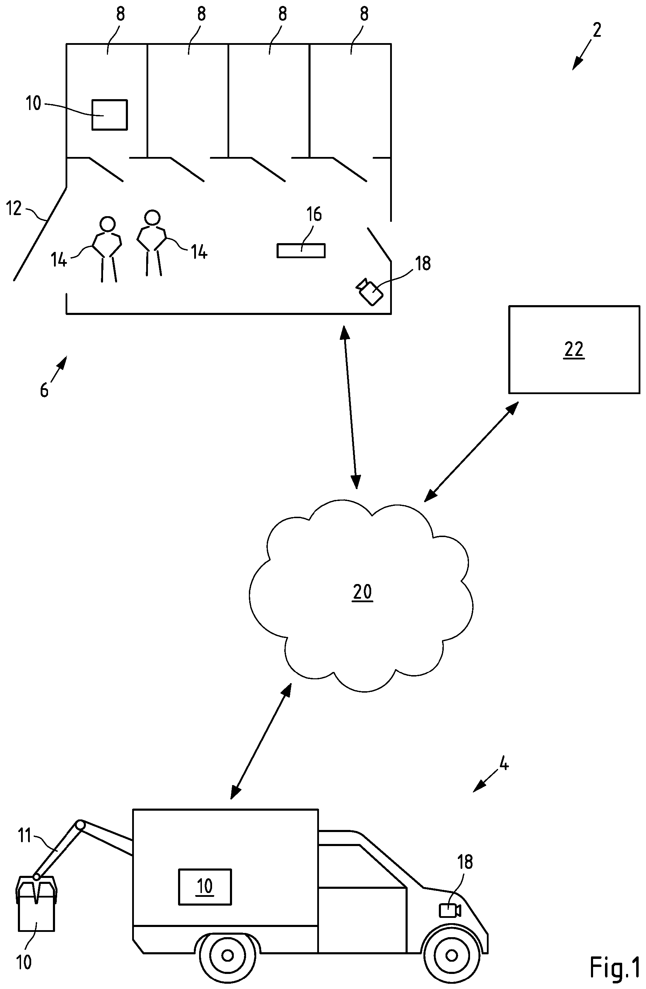

In Fig. 1 ist eine schematische Darstellung einer beispielhaften Ausführungsform eines Systems 2 gemäß der vorliegenden Erfindung gezeigt.

Das System 2 umfasst ein Fahrzeug 4 zur Verwendung als Übergabevorrichtung für mindestens eine Übergabestelle 6. Die Übergabestelle 6 ist dafür eingerichtet, dem Fahrzeug 4 einen Zugang zu Aufnahmevorrichtungen 8 zu ermöglichen, so dass an der Übergabestelle 6 eine Übergabe von Sendungen und/oder Lieferungen 10 von dem Fahrzeug 4 zu den Aufnahmevorrichtungen 8 bzw. von den Aufnahmevorrichtungen 8 zu dem Fahrzeug 4 durchgeführt werden kann.

Bei einer Sendung und/oder Lieferung 10 handelt es sich beispielsweise um einen Brief (insbesondere einen Brief mit darin enthaltener Ware, z.B. einem Buch), ein Päckchen oder ein Paket. Bei einer Aufnahmevorrichtung 8 handelt es sich beispielsweise um einen Paketkasten, welcher für eine Aufnahme und Verwahrung von Sendungen und/oder Lieferungen 10 verwendet wird und dem Nutzer ermöglicht, Sendungen und/oder Lieferungen 10 bei Abwesenheit des Nutzers an oder bei seinem Wohnsitz zu empfangen oder zu versenden.

Für eine Bestückung der Aufnahmevorrichtungen 8 bzw. für eine Abholung der Sendungen und/oder Lieferungen 10 aus den Aufnahmevorrichtungen 8 ist seitens des Zustellunternehmens das Fahrzeug 4 vorgesehen. In diesem Ausführungsbeispiel handelt es sich bei dem Fahrzeug 4 um ein manuell oder autonom gesteuertes Landfahrzeug, welches insbesondere automatisiert Sendungen und/oder Lieferungen 10 an die Aufnahmevorrichtungen übergeben kann. Für eine automatisierte Übergabe ist ein Roboterarm 11 vorgesehen, welcher eine Übergabe von Sendungen und/oder Lieferungen 10 an der Übergabestelle 6 durchführen kann, beispielsweise wenn das Fahrzeug 4 in die Übergabestelle 6 über ein Tor 12 eingefahren ist.

An der Übergabestelle 6 können sich Personen 14 oder Objekte 16 befinden. Eine Zustandsinformation kann erhalten werden, beispielsweise unter Verwendung eines Sensors 18 an der Übergabestelle 6 und/oder an dem Fahrzeug 4, wobei die Zustandsinformation zumindest charakteristisch für die Anwesenheit von Personen 14 oder Objekten 16 an der Übergabestelle ist. Beispielsweise kann mindestens ein auf elektromagnetische Strahlung empfindlicher Sensor verwendet werden, insbesondere ein optischer Sensor bzw. eine Kamera. Beispielsweise können Sensorwerte des Sensors 18 über Bildauswertungsverfahren oder Bilderkennungsverfahren ausgewertet werden. Ein Sensor 18 kann ebenso empfindlich für Wärmestrahlung oder Ultraschall sein und insbesondere einen Bewegungssensor umfassen. Der Sensor 18 kann weiter für eine Distanzmessung eingerichtet sein, beispielsweise anhand eines Lidar-Sensors oder einer (TOF)-Kamera.

Sensorwerte oder eine Zustandsinformation kann beispielsweise über eine Kommunikationseinrichtung 20 übermittelt werden, wobei das Fahrzeug 4 und die Übergabestelle 6 über die Kommunikationseinrichtung 20 kommunizieren. Die Kommunikationseinrichtung 20 umfasst beispielsweise einen Computer, Server und/oder ein Netzwerk.

Weiter ist ein Back-End 22 vorgesehen, welches ebenfalls mit der Kommunikationseinrichtung 20 in Verbindung steht. Teile der Kommunikationseinrichtung 20, beispielsweise ein Server, können auch in das Back-End 22 integriert sein.

Weitere Vorrichtungen können vorgesehen sein, beispielswiese ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

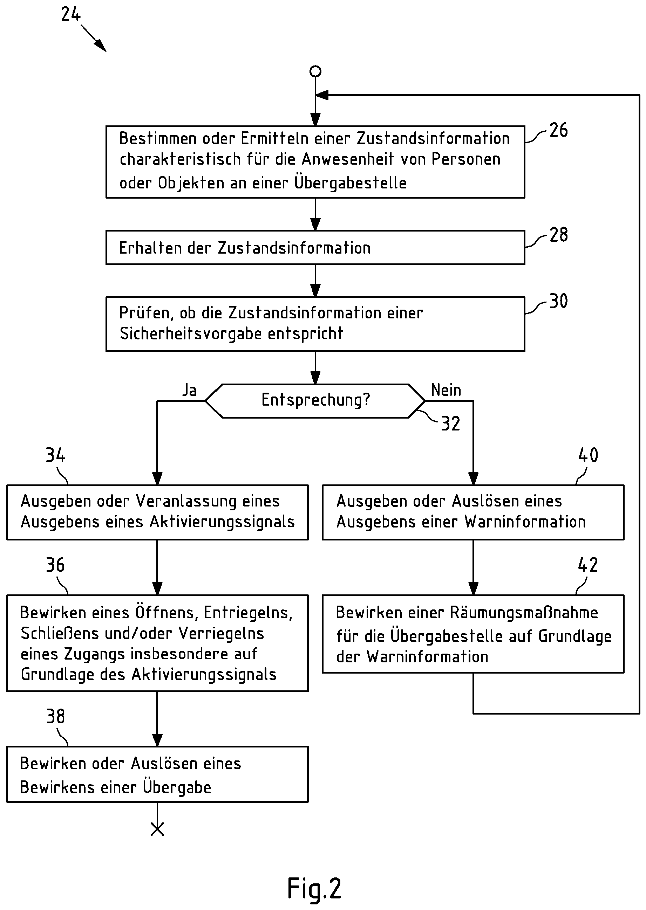

Fig. 2 zeigt ein Flussdiagramm 24 einer beispielhaften Ausführungsform eines Verfahrens zur Absicherung einer Übergabestelle für mindestens eine Aufnahmevorrichtung, durchgeführt von einer oder mehreren Vorrichtungen, gemäß dem ersten Aspekt der vorliegenden Erfindung.

Schritt 26 betrifft ein Bestimmen oder Ermitteln einer Zustandsinformation charakteristisch für die Anwesenheit von Personen oder Objekten an einer Übergabestelle. Wie bereits beschrieben, wird beispielsweise eine optische Information von der Übergabestelle oder eine Distanzmessung von Oberflächen an der Übergabestelle vorgenommen. Beispielsweise kann über eine Bilderkennung oder Klassifizierung festgestellt werden, ob sich Personen oder Objekte an der Übergabestelle befinden. Die Zustandsinformation ist beispielsweise weiter charakteristisch für den Status mindestens einer Übergabevorrichtung und/oder der Übergabestelle. Beispielsweise wird mit der Zustandsinformation erfasst, ob die mindestens eine Übergabevorrichtung und/oder die Übergabestelle fehlerbehaftet oder funktionstüchtig sind.

In Schritt 28 wird die Zustandsinformation erhalten. Beispielsweise wird die Zustandsinformation von einer Sensoreinrichtung oder einer Auswertevorrichtung an eine weitere Vorrichtung, beispielsweise einen Server oder eine Kontrolleinheit weitergegeben und dort erhalten.

In Schritt 30 wird geprüft, ob die Zustandsinformation einer Sicherheitsvorgabe entspricht. Die Sicherheitsvorgabe umfasst beispielsweise eine maximale oder minimale Anzahl an Personen und/oder Objekten, welche sich an der Übergabestelle befinden können. Die Sicherheitsvorgabe kann auch eine weitere Klassifizierung der Zustandsinformation berücksichtigen, beispielsweise dass an der Übergabestelle anwesende Objekte nur eine maximale Größe haben sollen oder dass Personen und/oder Objekte nur an manchen Positionen an der Übergabestelle anwesend sein sollen.

Über die Schritt 32 wird entsprechend dem Ergebnis der Prüfung aus Schritt 30 entschieden, welche weiteren Schritte ausgeführt werden.

Schritt 34 betrifft ein Ausgeben oder Veranlassung eines Ausgebens eines Aktivierungssignals nur dann, wenn die Zustandsinformation der Sicherheitsvorgabe entspricht. Beispielsweise wird in Schritt 36 ein Öffnen, Entriegeln, Schließen und/oder Verriegeln eines Zugangs insbesondere auf Grundlage des Aktivierungssignals bewirkt. Als Zugang an der Übergabestelle ist beispielsweise mindestens eine Tür als Zugang für Personen vorgehen und/oder mindestens ein Tor als Zugang für eine Übergabevorrichtung vorgesehen. Ebenso kann mindestens eine Aufnahmevorrichtung an der Übergabestelle mit einer Tür als Zugang zur Aufnahme von Sendungen und/oder Lieferungen versehen sein, wobei die Tür zur Aufnahmevorrichtung insbesondere durch das Aktivierungssignal beeinflusst wird.

Weiter betrifft Schritt 38 das Bewirken einer Übergabe mindestens einer Sendung und/oder Lieferung zwischen der Übergabevorrichtung und einer Aufnahmevorrichtung insbesondere auf Grundlage des Aktivierungssignals. Insbesondere wird eine Sendung und/oder Lieferung automatisiert, beispielsweise mittels eines Roboterarms, aus der Übergabevorrichtung entnommen und in die Aufnahmevorrichtung gebracht oder aus der Aufnahmevorrichtung entnommen und in die Übergabevorrichtung gebracht. Das Verfahren kann beispielsweise mit Schritt 38 beendet werden.

Wenn keine Entsprechung der Zustandsinformation mit der Sicherheitsvorgabe nach Schritt 32 besteht, wird beispielsweise in Schritt 40 ein Ausgeben oder Auslösen eines Ausgebens einer Warninformation durchgeführt.

Beispielsweise wird in Schritt 42 eine Räumungsmaßnahme für die Übergabestelle auf Grundlage der Warninformation bewirkt. Als Räumungsmaßnahme werden insbesondere Maßnahmen verstanden, welche eine Räumung der Übergabestelle direkt oder indirekt bewirken bzw. fördern. Beispielsweise wird eine akustische oder optische Warnung ausgegeben oder deren Ausgabe bewirkt. Weitere Maßnahmen sind beispielsweise eine Steigerung des Geräuschpegels, eine Veränderung der Temperatur, eine Veränderung der Lichtverhältnisse, beispielsweise eine Abdunkelung der Übergabestelle. Weiter wird beispielsweise eine Kommunikation eines Operators am Back-End mit der Person/den Personen an der Übergabestelle initiiert. Ebenso kann Personal wie Mitarbeiter, ein Wartungsdienst, ein Sicherheitsdienst, ein Rettungsdienst oder die Polizei auf Grundlage einer Warninformation benachrichtigt werden. Im Anschluss an Schritt 42 kann beispielsweise das Verfahren mit Schritt 26 neu beginnen.

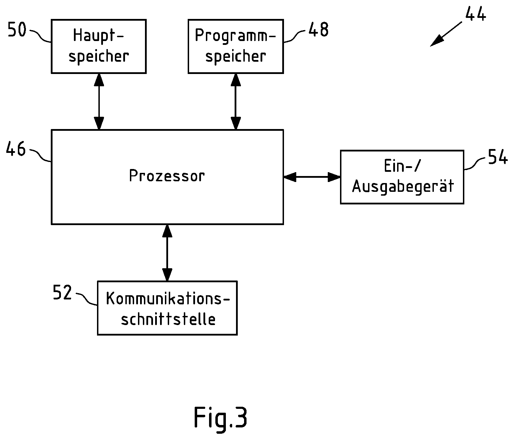

Fig. 3 zeigt ein Blockdiagramm eines Ausführungsbeispiels einer Vorrichtung 44, welche insbesondere ein beispielhaftes Verfahren gemäß dem ersten Aspekt der Erfindung ausführen kann. Ein Fahrzeug gemäß dem zweiten Aspekt bzw. eine Übergabestelle gemäß dem dritten Aspekt der Erfindung kann beispielsweise eine solche Vorrichtung 44 gemäß Fig. 3 umfassen.

Die Vorrichtung 44 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 46 der Vorrichtung 44 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 46 führt Programmanweisungen aus, die in Programmspeicher 48 gespeichert sind, und speichert beispielsweise Zwischenergebnisse oder ähnliches in Arbeits- oder Hauptspeicher 50. Zum Beispiel ist Programmspeicher 48 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 50 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 48 ist vorzugsweise ein lokaler mit der Vorrichtung 44 fest verbundener Datenträger. Mit der Vorrichtung 44 fest verbundene Datenträger sind beispielsweise Festplatten, die in die Vorrichtung 44 eingebaut sind. Alternativ kann der Datenträger beispielsweise auch ein mit der Vorrichtung 44 trennbar verbindbarer Datenträger sein wie ein Speicher-Stick, ein Wechseldatenträger, eine tragbare Festplatte, eine CD, eine DVD und/oder eine Diskette.

Programmspeicher 48 enthält beispielsweise das Betriebssystem von der Vorrichtung 44, das beim Starten der Vorrichtung 44 zumindest teilweise in Hauptspeicher 50 geladen und vom Prozessor 46 ausgeführt wird. Insbesondere wird beim Starten von Vorrichtung 44 zumindest ein Teil des Kerns des Betriebssystems in den Hauptspeicher 50 geladen und von Prozessor 46 ausgeführt. Das Betriebssystem von Vorrichtung 44 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 44 zur Datenverarbeitung. Es verwaltet beispielsweise Betriebsmittel wie Hauptspeicher 50 und Programmspeicher 48, Kommunikationsschnittstelle 52, Ein- und Ausgabegerät 54, stellt unter anderem durch Programmierschnittstellen anderen Programmen grundlegende Funktionen zur Verfügung und steuert die Ausführung von Programmen.

Prozessor 46 steuert die Kommunikationsschnittstelle 52, welche beispielsweise eine Netzwerkschnittstelle sein kann und als Netzwerkkarte, Netzwerkmodul und/oder Modem ausgebildet sein kann. Die Kommunikationsschnittstelle 52 ist insbesondere dazu eingerichtet, eine Verbindung der Vorrichtung 44 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 52 kann beispielsweise Daten (über das Kommunikationssystem) empfangen und an Prozessor 46 weiterleiten und/oder Daten von Prozessor 46 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 46 zumindest ein Ein-/Ausgabegerät 54 steuern. Ein-/Ausgabegerät 54 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 54 kann beispielsweise Eingaben eines Benutzers aufnehmen und an Prozessor 46 weiterleiten und/oder Informationen für den Benutzer von Prozessor 46 empfangen und ausgeben.

Weiter können Speichermedien vorgesehen sein, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 46 der Fig. 3) sein, beispielsweise ein (nicht-flüchtiger oder flüchtiger) Programmspeicher des Prozessors oder ein Teil davon (wie Programmspeicher 48 in Fig. 3). Ausführungsbeispiele eines Speichermediums sind ein Flash-Speicher, eine SSD-Festplatte, eine magnetische Festplatte, eine Speicherkarte, ein Memory Stick (z.B. ein USB-Stick), eine CD-ROM oder DVD oder eine Diskette.

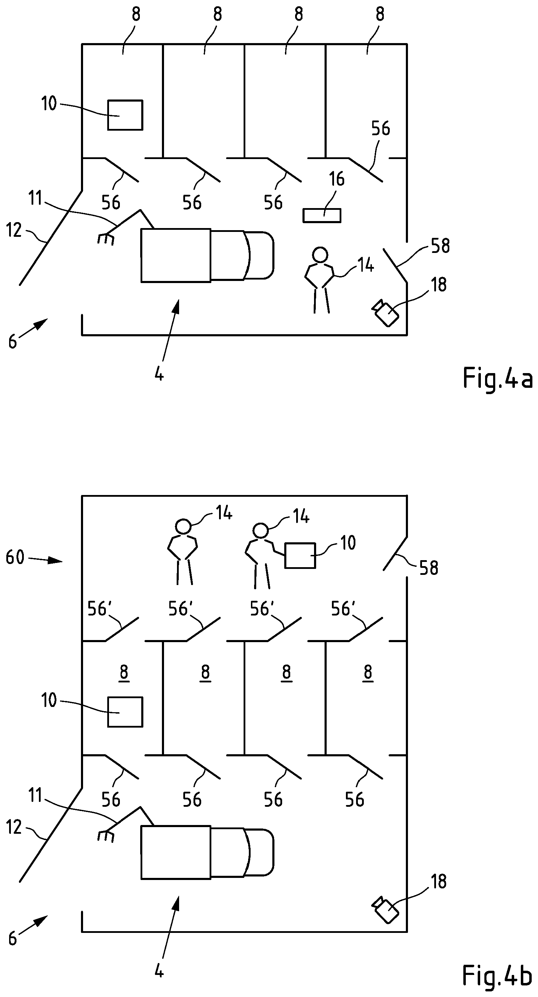

Fig. 4a, b zeigen schematische Darstellungen von beispielhaften Ausführungsformen von Fahrzeugen 4 und Übergabestellen 6 gemäß dem zweiten und dritten Aspekt der vorliegenden Erfindung. In den Fig. 4a, b und auch Fig. 1 werden jeweils für entsprechende Elemente die gleichen Bezugszeichen verwendet, auch wenn die Ausgestaltungen der Elemente der einzelnen Ausführungsformen untereinander variieren können.

Fig. 4a zeigt ein Ausführungsbeispiel einer Übergabestelle 6 gemäß dem dritten Aspekt der vorliegenden Erfindung, wobei die Übergabestelle 6 für mehrere Aufnahmevorrichtungen 8 eingerichtet ist, wie z.B. eine Paketstation, eine Schließfachanlage oder Warenzustellungsbehälter, insbesondere Paketkästen. Die Aufnahmevorrichtungen 8 sind für eine Aufnahme und Verwahrung von Sendungen und/oder Lieferungen 10 eingerichtet und weisen Türen 56 auf, über welche die Sendungen und/oder Lieferungen 10 in die Aufnahmevorrichtungen 8 eingebracht oder entnommen werden können. Die Türen 56 können weiter geschlossen und verriegelt werden, so dass ein Zugriff für unberechtigte Personen verhindert werden kann.

Ein Zugang für Personen 14 zur Übergabestelle 6 in Form einer Tür 58 ist vorgesehen. Beispielsweise ist die Übergabestelle 6 aus Fig. 4a öffentlich und beliebige Personen 14 können eintreten um sich an der Übergabestelle 6 aufzuhalten und die Aufnahmevorrichtungen 8 zu nutzen. Ebenso kann eine Zugangskontrollvorrichtung vorgesehen sein, wobei nur registrierte Personen 14 Zugang über die Tür 58 erhalten. Letztlich wird aber auch dann die Übergabestelle 6 von Personen 14 genutzt, um Zugriff auf die Aufnahmevorrichtungen 8 zu erhalten.

Die Übergabestelle 6 ist dafür eingerichtet, dass ein Fahrzeug 4 gemäß dem zweiten Aspekt der Erfindung über ein Tor 12 in die Übergabestelle 6 einfahren kann, so dass eine Übergabe von der Übergabestelle 6 geschützt wird, beispielsweise vor Witterungseinflüssen oder unbefugtem Zugriff. Die Übergabe wird beispielsweise mittels eines Roboterarms 11 durchgeführt, welcher Sendungen und/oder Lieferungen 10 zwischen dem Fahrzeug 4 und den Aufnahmevorrichtungen 8 übergeben kann.

Ein Sensor 18 zum Bestimmen oder Ermitteln einer Zustandsinformation charakteristisch für die Anwesenheit von Personen 14 oder Objekten ist vorgesehen.

Fig. 4b zeigt ein weiteres Ausführungsbeispiel einer Übergabestelle 6 gemäß dem dritten Aspekt der vorliegenden Erfindung, wobei die Übergabestelle 6 im Gegensatz zu Fig. 4a nicht öffentlich ist.

Ein Zugriff auf die Aufnahmevorrichtungen 8 durch die Personen 14 ist vielmehr über einen von der Übergabestelle 6 separaten Vorraum 60 vorgesehen, welcher einen Zugang für Personen 14 in Form einer Tür 58 aufweist. Die Aufnahmevorrichtungen 8 weisen jeweils mindestens zwei Türen 56, 56' auf, wobei jeweils eine Tür 56' für einen Zugriff durch Personen 14 vom Vorraum 60 ausgestaltet ist.

Die weiteren Türen 56 an den Aufnahmevorrichtungen 8 dienen einem Bestücken bzw. Entnehmen von Sendungen und/oder Lieferungen 10 innerhalb einer Übergabe seitens des Zustellunternehmens. Entsprechend ist die Übergabestelle 6 dafür eingerichtet, dass ein Fahrzeug 4 als Übergabevorrichtung in die Übergabestelle 6 einfahren kann, so dass eine Übergabe von Sendungen und/oder Lieferungen 10 von und zu den Aufnahmevorrichtungen 8 geschützt stattfinden kann. Ein Sensor 18 zum Bestimmen oder Ermitteln einer Zustandsinformation charakteristisch für die Anwesenheit von Personen 14 oder Objekten ist an der Übergabestelle 6 vorgesehen.

Die von den Sensoren 18 der Ausführungsformen aus Fig. 4a und 4b bestimmte oder ermittelte Zustandsinformation kann in einem Verfahren gemäß dem ersten Aspekt der vorliegenden Erfindung verwendet werden. Ebenso können die Fahrzeuge 4 Sensoren aufweisen, um eine Zustandsinformation bereitzustellen.

Die Sicherheitsvorgaben, Aktivierungssignale, Warninformationen und eventuelle Räumungsmaßnahmen für die Ausführungsformen aus Fig. 4a und 4b können unterschiedlich ausgestaltet sein. Da die Übergabestelle 6 aus Fig. 4a öffentlich ist, kann beispielsweise eine gewisse maximale Anzahl an Personen zulässig sein. Ebenso kann auf Grundlage eines Aktivierungssignals die Tür 58 für Personen 14 geöffnet, entriegelt, geschlossen oder verriegelt werden, um Personen 14 das Verlassen der Übergabestelle 6 zu ermöglichen oder um die Übergabestelle 6 gegen einen Eintritt zu sichern. Bei der nicht öffentlichen Übergabestelle 6 kann beispielsweise die Sicherheitsvorgabe vorgeben, dass keine Personen 14 anwesend sein dürfen und dass anhand einer Warninformation ein Sicherheitsdienst benachrichtigt wird.

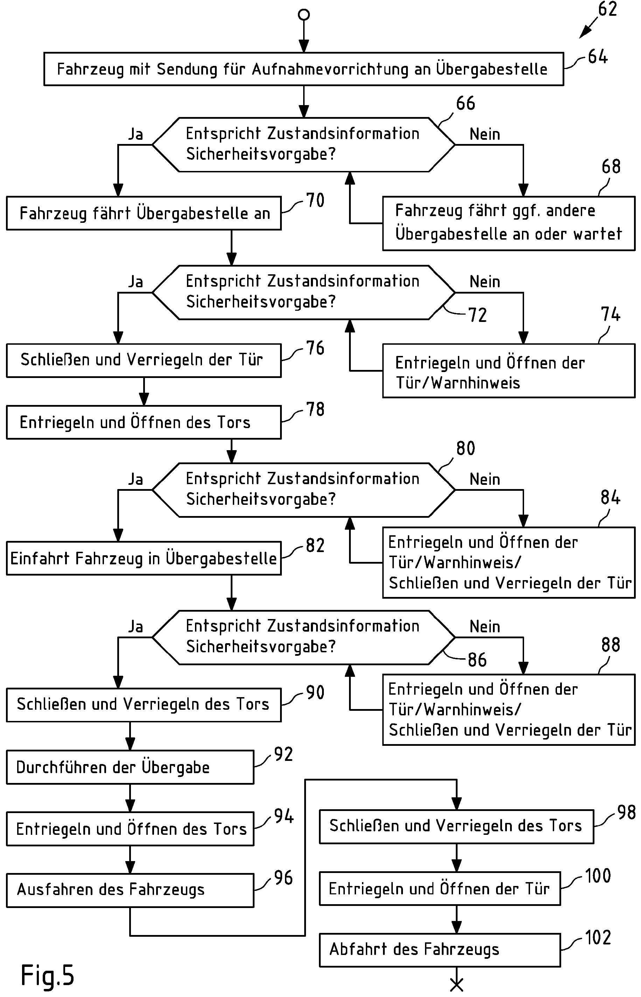

Fig. 5 zeigt ein Flussdiagramm 62 einer weiteren beispielhaften Ausführungsform eines Verfahrens gemäß dem ersten Aspekt der vorliegenden Erfindung. Diese beispielhafte Ausführungsform ist anhand einer chronologischen Abfolge von Schritten erläutert. Mehrere der Schritte können jedoch auch gleichzeitig ausgeführt werden oder die zeitliche Reihenfolge von Schritten vertauscht werden. Weiter können auch einzelne Schritte ausgelassen, wiederholt oder hinzugenommen werden.

Die Schritte aus Fig. 5 beruhen beispielsweise auf einer Zusammenwirkung mit einer Übergabestelle aus Fig. 4a.

In Schritt 64 wird ein Fahrzeug mit einer Sendung und/oder Lieferung für eine Übergabestelle bereitgestellt. Beispielsweise wird ein Fahrzeug an einer zentralen Verteilerstelle für Sendungen und/oder Lieferungen mit einer Sendung und/oder Lieferung beladen. Ebenso kann beispielsweise eine Sendung und/oder Lieferung an einer Übergabestelle zur Abholung durch das Fahrzeug bereitliegen und dem Fahrzeug eine Abholung dieser Sendung und/oder Lieferung zugewiesen werden.

Schritt 66 ist in Fig. 5 verkürzt als eine Prüfung der Zustandsinformation auf eine Entsprechung mit der Sicherheitsvorgabe dargestellt. Schritt 66 umfasst allerdings zumindest:
- Erhalten einer Zustandsinformation zumindest charakteristisch für die Anwesenheit von Personen oder Objekten an der Übergabestelle;
- Prüfen, ob die Zustandsinformation einer Sicherheitsvorgabe entspricht; und
- Ausgeben oder Veranlassung eines Ausgebens eines Aktivierungssignals nur dann, wenn die Zustandsinformation der Sicherheitsvorgabe entspricht,
und insbesondere weiterhin:
- Bestimmen oder Ermitteln der Zustandsinformation charakteristisch für die Anwesenheit von Personen oder Objekten an der Übergabestelle.

Beispielsweise werden mit einem Sensor an der Übergabestelle Sensorwerte aufgenommen, welche zur Bestimmung oder Ermittlung der Zustandsinformation herangezogen werden können. Eine Sicherheitsvorgabe kann beispielsweise sein, dass sich keine Personen oder Objekte an der Übergabestelle befinden, so dass ein Blockieren einer Übergabe, ein unerlaubter Zugriff auf eine Sendung und/oder Lieferung während der Übergabe und/oder ein Verletzungsrisiko vermieden wird.

Wenn der Sicherheitsvorgabe nicht entsprochen wird, kann das Fahrzeug beispielsweise in Schritt 68 eine andere Übergabestelle anfahren, um unnötige Wartezeiten zu vermeiden. Weiter kann auch das Fahrzeug beispielsweise zunächst in der zentralen Verteilerstelle verbleiben und warten, bis die Zustandsinformation der Übergabestelle der Sicherheitsvorgabe entspricht, was beispielsweise von dem Fahrzeug bewirkt wird oder durch eine Kontrollzentrale vorgegeben wird.

Wird der Sicherheitsvorgabe entsprochen, fährt das Fahrzeug in Schritt 70 die Übergabestelle an.

Wenn das Fahrzeug sich an der Übergabestelle befindet, wird in Schritt 72 eine Prüfung der Zustandsinformation vorgenommen, wobei Schritt 72 wie Schritt 66 verkürzt dargestellt ist.

Wird der Sicherheitsvorgabe nicht entsprochen, beispielsweise da sich entgegen der Sicherheitsvorgabe Personen an der Übergabestelle aufhalten, wird beispielsweise in Schritt 74 eine Tür für Personen entriegelt und geöffnet. Räumungsmaßnahmen können durchgeführt werden, beispielsweise wird ein optischer oder akustischer Warnhinweis an die anwesenden Personen gegeben, die Übergabestelle zu verlassen. In der Zwischenzeit wartet das Fahrzeug beispielsweise an der Übergabestelle oder fährt eine andere Übergabestelle an. Beispielsweise kann nach einer vorgegebenen Zeit erneut eine Prüfung der Zustandsinformation in Schritt 72 vorgenommen werden, um festzustellen, ob die Personen die Übergabestelle verlassen haben.

Wird der Sicherheitsvorgabe entsprochen, kann in Schritt 76 die Tür verriegelt und verschlossen werden, so dass keine weiteren Personen die Übergabestelle betreten können. In Schritt 78 kann ein Entriegeln und Öffnen des Tors erfolgen, um eine Einfahrt des Fahrzeugs in Schritt 82 zu ermöglichen.

Vor Schritt 82 kann jedoch mit Schritt 80 erneut eine Prüfung der Zustandsinformation durchgeführt werden, beispielsweise um sicherzustellen, dass während des Öffnens des Tors keine Personen in die Übergabestelle gelangt sind. Hierbei ist Schritt 82 wie Schritt 66 verkürzt dargestellt. Weiter kann auch ein Sensor am Fahrzeug vorgesehen sein, welcher durch das geöffnete Tor hindurch eine Bestimmung oder Ermittlung der Zustandsinformation bewirken kann.

Wird der Sicherheitsvorgabe nicht entsprochen, können ähnlich der Schritt 74 in Schritt 84 Räumungsmaßnahmen ergriffen und beispielsweise die Tür entriegelt und geöffnet werden. Nach erfolgten Räumungsmaßnahen kann die Tür wieder geschlossen und verriegelt werden, beispielsweise nach Ablauf einer bestimmten Zeit oder nach einer erneuten Prüfung einer Zustandsinformation.

In Schritt 82 erfolgt schließlich die Einfahrt des Fahrzeugs in die Übergabestelle. Optional kann in Schritt 86 eine weitere verkürzt dargestellte Prüfung der Zustandsinformation erfolgen und ggf. Räumungsmaßnahmen in Schritt 88 vorgenommen werden.

In Schritt 90 wird das Tor geschlossen und verriegelt, um wiederum ein unbefugtes Eintreten von Personen durch das Tor zu verhindern. Mit Schritt 92 erfolgt schließlich eine Übergabe von Sendungen und/oder Lieferungen zwischen dem Fahrzeug und den Aufnahmevorrichtungen.

Weiter kann nach erfolgter Übergabe in Schritt 94 das Tor entriegelt und geöffnet werden, um eine Ausfahrt des Fahrzeugs in Schritt 96 zu ermöglichen. Nach einem Schließen und Verriegeln des Tors in Schritt 98 kann die Tür in Schritt 100 entriegelt und geöffnet werden, damit Personen die Übergabestelle wieder betreten können. In Schritt 102 fährt das Fahrzeug ab und das Verfahren wird beendet.

Zwischen den einzelnen Schritten 94, 96, 98, 100 und 102 können weiter Prüfungen der Zustandsinformation ähnlich zu Schritt 66 erfolgen, was in Fig. 5 nicht dargestellt ist. Beispielsweise kann hiermit sichergestellt werden, dass das Öffnen oder Schließen des Tors und der Tür sowie die Ausfahrt des Fahrzeugs nicht blockiert werden.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Absicherung einer Übergabestelle (6) für mindestens eine Aufnahmevorrichtung (8), durchgeführt von einer oder mehreren Vorrichtungen,
- wobei die Übergabestelle (6) dafür eingerichtet ist, einer als Fahrzeug ausgestalteten Übergabevorrichtung einen Zugang zu mindestens einer Aufnahmevorrichtung (8) zu gewähren, wobei die Übergabestelle (6) so dimensioniert ist, dass die als Fahrzeug ausgestaltete Übergabevorrichtung in die Übergabestelle (6) einfahren kann, wobei die Übergabestelle einen Raum umfasst, in dem die mindestens eine Aufnahmevorrichtung vorhanden ist,
das Verfahren umfassend:
- Erhalten einer Zustandsinformation zumindest charakteristisch für die Anwesenheit von mindestens einer Person (14) und/oder mindestens einem Objekt (16) an der Übergabestelle (6);
- Prüfen, ob die Zustandsinformation einer Sicherheitsvorgabe entspricht, wobei die Sicherheitsvorgabe eine maximale oder minimale Anzahl von Personen und/oder Objekten an der Übergabestelle umfasst; und
- Ausgeben oder Veranlassung eines Ausgebens eines Aktivierungssignals nur dann, wenn die Zustandsinformation der Sicherheitsvorgabe entspricht, wobei auf Grundlage des Aktivierungssignals eine automatisierte Übergabe einer Sendung/ Lieferung zwischen der Übergabevorrichtung und der Aufnahmevorrichtung durchgeführt wird.

2. Verfahren nach Anspruch 1, weiterhin umfassend:
- Bestimmen oder Ermitteln der Zustandsinformation charakteristisch für die Anwesenheit von mindestens einer Person (14) und/oder mindestens einem Objekt (16) an der Übergabestelle (6).

3. Verfahren nach Anspruch 2, wobei das Bestimmen oder Ermitteln der Zustandsinformation die Verwendung mindestens eines auf elektromagnetische Strahlung oder auf Ultraschall empfindlichen Sensors (18) umfasst, insbesondere mindestens eines optischen und/oder auf Wärmestrahlung empfindlichen Sensors (18) und/oder wobei das Bestimmen oder Ermitteln der Zustandsinformation von der Übergabevorrichtung und/oder der Übergabestelle (6) durchgeführt wird und/oder wobei die Durchführung des Bestimmens oder Ermittelns der Zustandsinformation über die Erfassung eines Status der Übergabevorrichtung ausgelöst wird oder die Auslösung bewirkt wird.

4. Verfahren nach einem der Ansprüche 1 bis 3, wobei die Zustandsinformation weiter charakteristisch für den Status von mindestens einem Zugang zur Übergabestelle (6) ist und/oder das Aktivierungssignal ursächlich für eine Statusänderung von mindestens einem Zugang zur Übergabestelle (6) ist.

5. Verfahren nach Anspruch 4, wobei die Übergabestelle (6) mindestens ein Tor (12) als Zugang für die Übergabevorrichtung (6) aufweist, das Verfahren weiterhin umfassend:
- Bewirken eines Öffnens und/oder Entriegelns des Tors (12); oder
- Bewirken eines Schließens und/oder Verriegelns des Tors (12); insbesondere auf Grundlage des Aktivierungssignals, wobei das Aktivierungssignal ursächlich für eine Statusänderung des Tors (12) ist.

6. Verfahren nach Anspruch 4 oder 5, wobei die Übergabestelle (6) mindestens eine Tür (58) als Zugang für Personen (14) aufweist, das Verfahren weiterhin umfassend:
- Bewirken eines Öffnens und/oder Entriegelns der Tür (58); oder
- Bewirken eines Schließens und/oder Verriegelns der Tür (58); insbesondere auf Grundlage des Aktivierungssignals, wobei das Aktivierungssignal ursächlich für eine Statusänderung der Tür (58) ist.

7. Verfahren nach einem der Ansprüche 1 bis 6 weiterhin umfassend:
- Ausgeben oder Auslösen eines Ausgebens einer Warninformation, wenn die Zustandsinformation nicht der Sicherheitsvorgabe entspricht.

8. Verfahren nach Anspruch 7, das Verfahren weiterhin umfassend:
- Bewirken einer Räumungsmaßnahme für die Übergabestelle (6) auf Grundlage der Warninformation.

9. Verfahren nach einem der Ansprüche 1 bis 8, das Verfahren weiterhin umfassend:
- Erhalten des Aktivierungssignals und/oder von Warninformation durch die Übergabevorrichtung; und
- Bewirken einer Änderung eines Betriebsmodus der Übergabevorrichtung auf Grundlage des Aktivierungssignals und/oder von Warninformation, wobei der Betriebsmodus der Übergabevorrichtung eine Durchführung mindestens einer Übergabe, eine Bewegung der Übergabevorrichtung, ein Warten der Übergabevorrichtung oder eine Kombination hiervon umfasst.

10. Verfahren nach einem der Ansprüche 1 bis 9, wobei das Fahrzeug ein Land-, Luft- und/oder Wasserfahrzeug ist.

11. Verfahren nach einem der Ansprüche 1 bis 10, wobei die Zustandsinformation weiter charakteristisch für den Status der mindestens einen Übergabevorrichtung ist.

12. Verfahren nach einem der Ansprüche 1 bis 11, wobei auf Grundlage des Aktivierungssignals ein Einfahren der Übergabevorrichtung in die Übergabestelle durchgeführt wird.

13. Vorrichtung (44) oder System (2) umfassend mehrere Vorrichtungen (44), wobei die Vorrichtung (44) bzw. die Vorrichtungen (44) dazu eingerichtet ist/sind oder entsprechende Mittel umfasst/umfassen, ein Verfahren nach einem der Ansprüche 1 bis 12 durchzuführen und/oder zu steuern.

14. Fahrzeug (4) zur Verwendung als Übergabevorrichtung für mindestens eine Übergabestelle (6),
- wobei das Fahrzeug (4) eine Vorrichtung (44) nach Anspruch 13 umfasst.

15. Übergabestelle (6) für mindestens eine Aufnahmevorrichtung (8),
- wobei die Übergabestelle (6) eine Vorrichtung (44) nach Anspruch 13 umfasst,
- wobei die Übergabestelle (6) dafür eingerichtet ist, einer als Fahrzeug (4) ausgestalteten Übergabevorrichtung einen Zugang zu mindestens einer Aufnahmevorrichtung (8) zu gewähren, und
- wobei die Übergabestelle (6) so dimensioniert ist, dass die als Fahrzeug (4) ausgestaltete Übergabevorrichtung in die Übergabestelle (6) einfahren kann.

16. Computerprogramm, umfassend Programmanweisungen, die einen Prozessor (46) zur Ausführung und/oder Steuerung des Verfahrens gemäß einem der Ansprüche 1 bis 12 veranlassen, wenn das Computerprogramm auf dem Prozessor (46) läuft.

## Claims

1. Method for securing a handover location (6) for at least one receiving device (8), carried out by one or more devices,
- wherein the handover location (6) is configured to grant a handover device configured as a vehicle access to at least one receiving device (8), wherein the handover location (6) is dimensioned such that the handover device configured as a vehicle can drive into the handover location (6), wherein the handover location comprises a space in which the at least one receiving device is present,
the method comprising:
- receiving state information that is at least characteristic of the presence of at least one person (14) and/or at least one object (16) at the handover location (6);
- checking whether the state information complies with a safety specification, wherein the safety specification comprises a maximum or minimum number of persons and/or objects at the handover location; and
- outputting, or causing output of, an activation signal only when the state information complies with the safety specification, wherein, on the basis of the activation signal, an automated handover of a consignment/delivery between the handover device and the receiving device is carried out.

2. Method according to claim 1, further comprising:
- determining or ascertaining the state information characteristic of the presence of at least one person (14) and/or at least one object (16) at the handover location (6).

3. Method according to claim 2, wherein determining or ascertaining the state information comprises the use of at least one sensor (18) sensitive to electromagnetic radiation or to ultrasound, in particular at least one optical sensor (18) and/or sensor (18) sensitive to thermal radiation, and/or wherein determining or ascertaining the state information is carried out by the handover device and/or the handover location (6), and/or wherein the carrying out of the determining or ascertaining of the state information is triggered by detecting a status of the handover device or the triggering is effected.

4. Method according to any one of claims 1 to 3, wherein the state information is further characteristic of the status of at least one access to the handover location (6), and/or the activation signal causes a status change of at least one access to the handover location (6).

5. Method according to claim 4, wherein the handover location (6) has at least one gate (12) as access for the handover device (6), the method further comprising:
- causing opening and/or unlocking of the gate (12); or
- causing closing and/or locking of the gate (12);
in particular on the basis of the activation signal, wherein the activation signal causes a status change of the gate (12).

6. Method according to claim 4 or 5, wherein the handover location (6) has at least one door (58) as access for persons (14), the method further comprising:
- causing opening and/or unlocking of the door (58); or
- causing closing and/or locking of the door (58); in particular on the basis of the activation signal, wherein the activation signal causes a status change of the door (58).

7. Method according to any one of claims 1 to 6, further comprising:
- outputting, or triggering output of, warning information when the state information does not comply with the safety specification.

8. Method according to claim 7, the method further comprising:
- causing an evacuation measure for the handover location (6) on the basis of the warning information.

9. Method according to any one of claims 1 to 8, the method further comprising:
- receiving the activation signal and/or warning information by the handover device; and
- causing a change in an operating mode of the handover device on the basis of the activation signal and/or warning information, wherein the operating mode of the handover device comprises carrying out at least one handover, movement of the handover device, waiting by the handover device, or a combination thereof.

10. Method according to any one of claims 1 to 9, wherein the vehicle is a land, air and/or water vehicle.

11. Method according to any one of claims 1 to 10, wherein the state information is further characteristic of the status of the at least one handover device.

12. Method according to any one of claims 1 to 11, wherein, on the basis of the activation signal, entry of the handover device into the handover location is carried out.

13. Apparatus (44) or system (2) comprising a plurality of apparatuses (44), wherein the apparatus (44) or the apparatuses (44) is/are configured, or comprises/comprise corresponding means, to carry out and/or control a method according to any one of claims 1 to 12.

14. Vehicle (4) for use as a handover device for at least one handover location (6),
- wherein the vehicle (4) comprises an apparatus (44) according to claim 13.

15. Handover location (6) for at least one receiving device (8), wherein the handover location (6) comprises an apparatus (44) according to claim 13,
- wherein the handover location (6) is configured to grant a handover device configured as a vehicle (4) access to at least one receiving device (8), and
- wherein the handover location (6) is dimensioned such that the handover device configured as a vehicle (4) can drive into the handover location (6).

16. Computer program comprising program instructions which cause a processor (46) to carry out and/or control the method according to any one of claims 1 to 12 when the computer program runs on the processor (46).

## Revendications

1. Procédé de sécurisation d'un point de transfert (6) pour au moins un dispositif de réception (8), exécuté par un ou plusieurs dispositifs,
- dans lequel le point de transfert (6) est conçu pour accorder à un dispositif de transfert réalisé sous forme de véhicule un accès à au moins un dispositif de réception (8), dans lequel le point de transfert (6) est dimensionné de telle sorte que le dispositif de transfert réalisé sous forme de véhicule puisse entrer dans le point de transfert (6), dans lequel le point de transfert comprend un espace dans lequel est présent l'au moins un dispositif de réception,
le procédé comprenant:
- recevoir une information d'état au moins caractéristique de la présence d'au moins une personne (14) et/ou d'au moins un objet (16) au point de transfert (6);
- vérifier si l'information d'état satisfait à une consigne de sécurité, la consigne de sécurité comprenant un nombre maximal ou minimal de personnes et/ou d'objets au point de transfert; et
- émettre, ou provoquer l'émission, d'un signal d'activation uniquement lorsque l'information d'état satisfait à la consigne de sécurité, une remise automatisée d'un envoi/d'une livraison entre le dispositif de transfert et le dispositif de réception étant effectuée sur la base du signal d'activation.

2. Procédé selon la revendication 1, comprenant en outre:
- déterminer ou établir l'information d'état caractéristique de la présence d'au moins une personne (14) et/ou d'au moins un objet (16) au point de transfert (6).

3. Procédé selon la revendication 2, dans lequel la détermination ou l'établissement de l'information d'état comprend l'utilisation d'au moins un capteur (18) sensible au rayonnement électromagnétique ou aux ultrasons, en particulier d'au moins un capteur optique (18) et/ou d'un capteur (18) sensible au rayonnement thermique, et/ou dans lequel la détermination ou l'établissement de l'information d'état est effectué(e) par le dispositif de transfert et/ou par le point de transfert (6), et/ou dans lequel l'exécution de la détermination ou de l'établissement de l'information d'état est déclenchée par la détection d'un état du dispositif de transfert ou le déclenchement est provoqué.

4. Procédé selon l'une des revendications 1 à 3, dans lequel l'information d'état est en outre caractéristique de l'état d'au moins un accès au point de transfert (6) et/ou le signal d'activation est à l'origine d'un changement d'état d'au moins un accès au point de transfert (6).

5. Procédé selon la revendication 4, dans lequel le point de transfert (6) comporte au moins un portail (12) comme accès pour le dispositif de transfert (6), le procédé comprenant en outre:
- provoquer l'ouverture et/ou le déverrouillage du portail (12); ou
- provoquer la fermeture et/ou le verrouillage du portail (12);
en particulier sur la base du signal d'activation, le signal d'activation étant à l'origine d'un changement d'état du portail (12).

6. Procédé selon la revendication 4 ou 5, dans lequel le point de transfert (6) comporte au moins une porte (58) comme accès pour des personnes (14), le procédé comprenant en outre:
- provoquer l'ouverture et/ou le déverrouillage de la porte (58); ou
- provoquer la fermeture et/ou le verrouillage de la porte (58); en particulier sur la base du signal d'activation, le signal d'activation étant à l'origine d'un changement d'état de la porte (58).

7. Procédé selon l'une des revendications 1 à 6, comprenant en outre:
- émettre, ou déclencher l'émission, d'une information d'avertissement lorsque l'information d'état ne satisfait pas à la consigne de sécurité.

8. Procédé selon la revendication 7, le procédé comprenant en outre:
- provoquer une mesure d'évacuation pour le point de transfert (6) sur la base de l'information d'avertissement.

9. Procédé selon l'une des revendications 1 à 8, le procédé comprenant en outre:
- recevoir le signal d'activation et/ou une information d'avertissement par le dispositif de transfert; et
- provoquer une modification d'un mode de fonctionnement du dispositif de transfert sur la base du signal d'activation et/ou d'une information d'avertissement, le mode de fonctionnement du dispositif de transfert comprenant l'exécution d'au moins un transfert, un déplacement du dispositif de transfert, une attente du dispositif de transfert ou une combinaison de ceux-ci.

10. Procédé selon l'une des revendications 1 à 9, dans lequel le véhicule est un véhicule terrestre, aérien et/ou nautique.

11. Procédé selon l'une des revendications 1 à 10, dans lequel l'information d'état est en outre caractéristique de l'état de l'au moins un dispositif de transfert.

12. Procédé selon l'une des revendications 1 à 11, dans lequel, sur la base du signal d'activation, une entrée du dispositif de transfert dans le point de transfert est effectuée.

13. Dispositif (44) ou système (2) comprenant plusieurs dispositifs (44), dans lequel le dispositif (44) ou les dispositifs (44) est/sont conçu(s) ou comprend/comprennent des moyens correspondants pour exécuter et/ou commander un procédé selon l'une des revendications 1 à 12.

14. Véhicule (4) destiné à être utilisé comme dispositif de transfert pour au moins un point de transfert (6),
- dans lequel le véhicule (4) comprend un dispositif (44) selon la revendication 13.

15. Point de transfert (6) pour au moins un dispositif de réception (8), dans lequel le point de transfert (6) comprend un dispositif (44) selon la revendication 13,
- dans lequel le point de transfert (6) est conçu pour accorder à un dispositif de transfert réalisé sous forme de véhicule (4) un accès à au moins un dispositif de réception (8), et
- dans lequel le point de transfert (6) est dimensionné de telle sorte que le dispositif de transfert réalisé sous forme de véhicule (4) puisse entrer dans le point de transfert (6).

16. Programme d'ordinateur comprenant des instructions de programme qui amènent un processeur (46) à exécuter et/ou commander le procédé selon l'une des revendications 1 à 12 lorsque le programme d'ordinateur s'exécute sur le processeur (46).
